# EUROPEAN PATENT SPECIFICATION

(11) **EP 1 204 474 B1**
(45) Date of publication and mention of the grant of the patent: **16.03.2005**
(21) Application number: 00956420.4
(22) Date of filing: 11.08.2000
(51) Int. Cl.: B01J 21/16, B01J 37/00, C04B 33/00

(54) **ATTRITION RESISTANT, SHAPED, CRYSTALLINE Mg-Al-Si-CONTAINING CLAY-CONTAINING BODIES**
ABRIEBFESTER KRISTALINE MG-AL-SI HALTENDE, TONHALTENDE FORMKÖRPER
CORPS FACONNES CRISTALLINS CONTENANT DE L'ARGILE, DU MAGNESIUM, DE L'ALUMINIUM ET DU SILICIUM, RESISTANTS A L'USURE

(30) Priority: 11.08.1999 US 372293
(43) Date of publication of application: 15.05.2002
(73) Proprietor: Akzo Nobel N.V., 6824 BM Arnhem (NL)
(72) Inventor: STAMIRES, Dennis, Newport Beach, CA 92660 (US); O'CONNER, Paul, NL-3871 KM Hoevelaken (NL); JONES, William, Cambridge CB2 2NJ (GB)
(74) Representative: Schalkwijk, Pieter Cornelis
(86) International application number: PCT/EP2000/007785
(87) International publication number: WO 2001/012319

(56) References cited:
- WO-A-96/04990
- DE-A- 4 405 876
- FR-A- 2 289 095
- US-A- 5 300 469

## Description

The present invention pertains to shaped crystalline Mg-Al-Si-containing clay-containing bodies and a process for the preparation thereof. Examples of these types of crystalline clays include smectites such as saponite and montmorillonite. Crystalline Mg-Al-Si-containing clay has several applications in the catalyst field and as absorbents. For most commercial applications crystalline days are formed into shaped bodies such as spheres. In all these applications where shaped bodies are exposed to severe processing conditions and environments, such as oil refinery applications, separations, purifications, and absorption processes, it is of paramount importance that the integrity of the crystalline Mg-Al-Si-containing clay-containing shaped bodies is kept intact and attrition is prevented.

In the prior art (See DE 4 405 876) crystalline Mg-Al-Si-containing clay is usually incorporated into binder or matrix material in order to obtain attrition resistant shaped bodies. Commonly used binder or matrix material is alumina prepared from alumina precursors such as aluminium chlorohydrol, soluble alumina salts, and acid dispersed pseudoboehmite, silica such as silica sols, silicates, silica-alumina cogels, and combinations thereof.

However, when crystalline Mg-Al-Si-containing clay is embedded in a matrix, the amount of active crystalline clay ending up in the resulting shaped bodies is relatively small. There are applications in which for performance reasons it is desired that the shaped bodies consist or mostly consist of active crystalline clay. Also, by the incorporation of crystalline Mg-Al-Si-containing clay into matrix material, physical properties of the crystalline clay such as specific surface area, pore size distribution, etcetera may be detrimentally affected.

Further, the distribution of the crystalline clay within the matrix is difficult to control. Another disadvantage of having to use a matrix to obtain attrition resistant bodies is the fact that most commonly used matrix/binder materials have some chemical activity, which in certain applications can cause undesirable side reactions. For instance, the one of the most commonly used binder material in FCC catalysts and additives is silica or silica based material. These types of binders are not suitable for use in sulphur oxides removal additives, because they detrimentally affect the sulphur removal.

The present invention provides crystalline Mg-Al-Si-containing clay-containing bodies which are attrition resistant without high amounts of binder having to be present. In fact, crystalline Mg-Al-Si-containing clay-containing bodies are provided which can be binder-free. The crystalline clay distribution within the crystalline Mg-Al-Si-containing clay-containing bodies of the invention can easily be controlled as will be explained further in the description. Within the context of the present specification, the term "crystalline clay" means a clay which gives an X-ray diffraction pattern characteristic of the specific type of synthetic clay.

The present invention is directed to a process for the preparation of crystalline Mg-Al-Si-containing clay-containing bodies from sources comprising an aluminium source, a magnesium source, and a silicon source, comprising the steps of:
a) preparing a precursor mixture,
b) shaping the precursor mixture to obtain shaped bodies,
c) optionally thermally treating the shaped bodies, and
d) aging to obtain crystalline Mg-Al-Si-containing clay-containing bodies.

The quintessence of the present invention is that crystalline Mg-Al-Si-containing clay is formed after shaping. This results in very attrition resistant bodies, without the need to add a binder material.
The crystalline clay is formed from an aluminium source, a magnesium source, and, a silicon source. Usually saponite or montmorillonite is formed.

The shaped bodies can be prepared in various ways. In a preferred embodiment of the invention, an aluminium source, a magnesium source, and, a silicon source are combined in a slurry to form a precursor mixture. Subsequently, said precursor mixture is shaped. The resulting shaped bodies are aged, optionally after thermal treatment, in a liquid to obtain crystalline Mg-Al-Si-containing clay-containing bodies.
It is also possible to prepare a precursor mixture from only one or two sources source such as an aluminium source and/or a magnesium source, and/or a silicon source, shape it, and then add one or more additional other sources to the shaped bodies in any of the subsequent process steps. During the aging step, the various sources react to give the crystalline Mg-Al-Si-containing clay-containing bodies. Of course, it is also possible to use combinations of the two preparation routes described above, for instance: add the aluminium source and the magnesium source to form the precursor mixture, shape to form bodies, and then age the shaped bodies in a liquid containing a silicon source to form saponite- or montmorillonite-containing bodies.

Suitable alumina sources include aluminium oxides and hydroxides such as transition alumina,aluminium trihydrate (gibbsite, bayerite) and its thermally treated forms, including flash calcined alumina, sols, amorphous alumina, (pseudo)boehmite, aluminium-containing clays such as kaolin, sepiolite, hydrotalcite, and bentonite, modified clays such as metakaolin, alumina salts such as aluminium nitrate, aluminium chloride, aluminium sulfate, aluminium chlorohydrate, sodium aluminate. With the process according to the inevntion it is also possibel to use cruder grades of aluminium trihydrate such as BOC (Bauxite Ore Concentrate) or bauxite. When clays are used as an Al-source, it may be necessary to activate the alumina in the clay by acid or base treatment, (hydro)thermal treatment, or combinations thereof, etcetera. Acid treatment comprises treatment with nitric acid, acetic acid, formic acid, phosphoric acid, sulphuric acid, hydrochloric acid, etcetera. Thermal treatment is usually performed at temperatures ranging from 30-1000°C, preferably 200-800°C, for a time ranging from several minutes to 24 hours, preferably 1-10 hours. Also mixtures of the above-mentioned aluminium sources can be used, and said different aluminium sources can be combined in the precursor mixture in any sequence. It is also possible to add an aluminium source after the shaping step. In that case, the precursor mixture may already contain an aluminium source or not. If an aluminium source is added after the shaping step, it preferably is in liquid when contacted with the shaped bodies. This can be done by dispersing or dissolving the aluminium source and adding it to the shaped bodies. Alternatively, the aluminium source can be added to the liquid in which the shaped bodies are aged. Also other aluminium sources then clay such as aluminium trihydrate may be pre-treated prior to the addition to the precursor mixture or prior to contacting it with the shaped bodies. Said pre-treatment may involve treatment with acid, base treatment, thermal and/or hydrothermal treatment, all optionally in the presence of seeds or combinations thereof. It is not necessary to convert all of the aluminium source into crystalline clay. Any excess aluminium will be converted into silica-alumina, alumina (usually in the form of y alumina or (crystalline) boehmite) and/or aluminina-magnesia during the aging step. These compounds improve the binding properties of the shaped bodies and may also provide different types of desirable functionalities for the bodies. For instance, silica-alumina and alumina provide acid sites for catalytic cracking and alumina (crystalline) boehmite also improves the nickel encapsulation capacity of the shaped bodies. The formation of, for example, (crystalline) boehmite may be promoted by adding seeds, either in the precursor mixture or during aging.

Suitable magnesium sources include magnesium oxides or hydroxides such as MgO, Mg(OH)₂, hydromagnesite, magnesium salts such as magnesium acetate, magnesium formate, magnesium hydroxy acetate, magnesium carbonate, magnesium hydroxy carbonate, magnesium bicarbonate, magnesium nitrate, magnesium chloride, magnesium-containing clays such as dolomite, sepiolite. Also mixtures of the above-mentioned magnesium sources can be used, and said different magnesium sources can be combined in the precursor mixture in any sequence and/or in any process step after the shaping step. If a magnesium source is added after the shaping step, it must be in liquid when contacted with the shaped bodies. This can be done by dispersing or dissolving the magnesium source and adding it to the shaped bodies. Alternatively, the magnesium source can be added to the liquid in which the shaped bodies are aged. The magnesium source may be pre-treated prior to the addition to the precursor mixture and/or prior to the addition to the shaped bodies. Said pre-treatment may comprise a thermal and/or a hydrothermal treatment, an acid treatment, a base treatment, all optionally in the presence of a seed, and/or combinations thereof. It is not necessary to convert all of the magnesium source into crystalline clay. Any excess magnesium will usually be converted to brucite or alumina-magnesia. For the sake of clarity, this excess of magnesium compounds in the shaped particle will be referred to in the description as magnesia. The presence of magnesia or alumina-magnesia in the shaped body may provide desirable functionalities to the shaped bodies. The presence of magnesia provides basic sites which render the shaped body suitable for removing or neutralising strong acid streams of gases or liquids.

Suitable silicon sources include sodium silicate and silica sol or mixtures thereof. Preferrably a silica sol is used which does not introduce sodium in the Mg-Al-Si-containing crystalline clay such as ammonium stabilised silica sol. If a silicon source is added after the shaping step, the silicon source must be in liquid when contacted with the shaped bodies. This can be done by dispersing or dissolving the silicon source and adding it to the shaped bodies. Alternativelly, the silicon source can be added to the liquid in which the shaped bodies are aged.

The various process steps will be described in more detail below.

### Preparation of the precursor mixture

In this step a precursor mixture is prepared from an aluminium source and/or a magnesium source and/or a silicon source in a liquid. In fact, all liquids are suitable, as long as they do not detrimentally interfere with the various sources. Suitable liquids are water, ethanol, propanol, etcetera. The amount of liquid can be chosen such that a mixture with a milky substance is obtained, but also mixtures with a higher viscosity, for instance doughs. are suitable. If more than one source is used for the precursor mixture, the sources can be added as solids, but they can also be added in liquid. The various sources can be added in any sequence. The preparation of the precursor mixture can be carried out with or without stirring, at room temperature or elevated temperature. Optionally, the precursor mixture is homogenised by, for instance, milling. Some conversion to crystalline clay may already take place upon combining the various sources, in fact, it is preferred that at least 5 wt% of the final total amount of crystalline Mg-Al-Si- containing clay is already formed prior to shaping, but for the present invention it is essential that conversion also takes place after the shaping step. Usually more than 25wt%, preferably more than 50 wt%, more preferably more than 75 wt% and most preferably 80-95 wt% of the final amount of crystalline Mg-Al-Si-containing clay in the shaped body is formed after the shaping step, because then shaped bodies with the highest physical strength are obtained. The ratio Mg:Al may vary from 0.1 to 15, and the Mg:Si ratio may vary from 0.05 to 1.5. If desired, organic or inorganic acids and bases, for example for control of the pH, may be added to the precursor mixture or added to any one of the aluminium source, magnesium source and/or silicon source before these are added to the precursor mixture. An example of a preferred modifier is an ammonium base, because upon drying no deleterious cations remain in the anionic clay. Optionally, the precursor mixture is pre-aged prior to the shaping step. The pre-aging temperature may vary from 25 °C to 500 °C for a time ranging from 1 minutes to several days and may be conducted under atmospheric or increased pressure such as autogeneous pressure at temperatures above 100 °C.

### Shaping

Suitable shaping methods include spray-drying, pelletising, extrusion (optionally combined with kneading), beading, or any other conventional shaping method used in the catalyst and absorbent fields or combinations thereof. The amount of liquid present in the precursor mixture used for shaping should be adapted to the specific shaping step to be conducted. It might be advisable to (partially) remove the liquid used in the precursor mixture and/or add additional or other liquid, and/or change the pH of the precursor mixture to make the precursor mixture gellable and thus suitable for shaping. Various additives commonly. used in the various shaping methods such as extrusion additives may be added to the precursor mixture used for shaping.

### Thermal treatment

After shaping the shaped bodies may optionally be submitted to a thermal treatment. Such a treatment increases the physical strength of the particles. The thermal treatment can be conducted in an oxygen-containing atmosphere, in an inert atmosphere or in steam at temperatures varying from 30 to 1000°C for a time ranging from a few minutes to 24 hours. As in, for instance, spray-drying a thermal treatment is inherently involved, a further thermal treatment may not be necessary.

### Aging

In this step, the shaped bodies are immersed in a protic liquid or a protic gaseous medium. During the aging step crystallisation to crystalline clay takes place. Suitable protic aging liquids or gaseous media are those liquids and gaseous media in which the shaped bodies do not dissolve, such as water, ethanol, methanol, propanol, steam, gaseous water, gaseous ethanol, etcetera. Increasing the temperature of the liquid and/or the pressure can reduce the aging time. The aging can also be conducted under autogeneous conditions. The aging temperature may range from 30 to 1000°C. The aging time can vary from 1 minute to several days, for instance 7 days. For some purposes it is advantageous to conduct several aging steps, optionally with intermediate drying steps, optionally followed by calcination steps. For instance, an aging step with a temperature below 100 °C may be followed by a hydrothermal aging step at a temperature above 100 °C and autogeneous pressure, or vice versa. As will be described below in further detail, additives can be added before, after or during any aging step.

For some applications it is desirable to have additives present in and/or on the shaped bodies according to the invention, both metals and non-metals, such as rare earth metals (e.g. Ce and La), Si, P, B, Group VI metals, Group VIII metals, noble metals such as Pt and Pd, alkaline earth metals (for instance Ca and Ba) and/or transition metals (for example Mn, Fe, Ti, V, Zr, Cu, Ni, Zn, Mo, Sn). Said metals and non-metals can be added separately or in mixtures in any of the preparation steps of the invention. For instance, they can easily be deposited on the shaped bodies before, during, or after aging, or else they can be added to the precursor mixture. Suitable sources of metals or non-metals are oxides, halides or any other salt, such as chlorides, nitrates, phosphates, etcetera. As mentioned above, the metals and non-metals may be added in any of the preparation steps. This can be especially advantageous for controlling the distribution of the metals and non-metals in the shaped bodies. It is even possible to calcine the shaped bodies, re-hydrate them and add additional additives.
With the help of additives the crystalline Mg-Al -Si clay-containing shaped bodies may be provided with desired functionalities, or the desired functionality may be increased by the addition of additives. The suitability of Mg-Al-Si clay-containing shaped bodies for the metal trapping in FCC may be improved by the addition of Zn. The presence of V and Zn improves the suitability for removal of S-compounds in the gasoline and diesel fraction of FCC.

The process according to the invention may be conducted batch-wise or in a continuous mode, optionally in a continuous multi-step operation. The process may also be conducted partly continuous and partly batch-wise.

The crystalline Mg-Al-Si clay-containing bodies may also be prepared to contain conventional catalyst components such as matrix or filler material (e.g. clay such as kaolin, titanium oxide, zirconia, alumina, silica, slica-alumina, bentonite etcetera), molecular sieve material ( e.g. zeolite Y , ZSM-5 etcetera). Said conventional catalyst components may be added prior to the shaping step. Because the Mg-Al-Si clay is formed in situ, the resulting body will have a homogeneous dispersion of anionic clay and catalyst components. With the method according to the invention, multiply functional bodies can be prepared which can be used as a catalyst or as a catalyst additive.

If desired, the crystalline Mg-Al-Si-containing clay-containing shaped bodies prepared by the process according to the invention may be subjected to ion exchange to change the chemical and physical properties of the clay. Said ion exchange can be conducted as soon as the crystalline clay has been formed. Suitable ion exchange compounds include any metal cation containing compound such as compounds containing Cu, Al, Mg, Zn, pillaring cations such as aluminum chlorohydrol, transition metals, e.g. Ni, Rare earths etcetera.

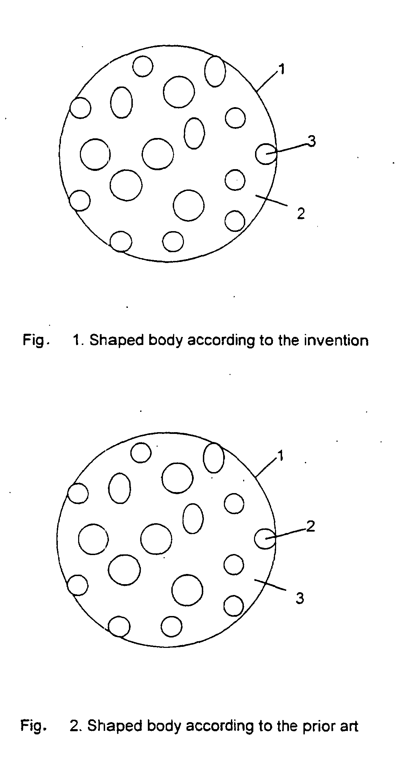

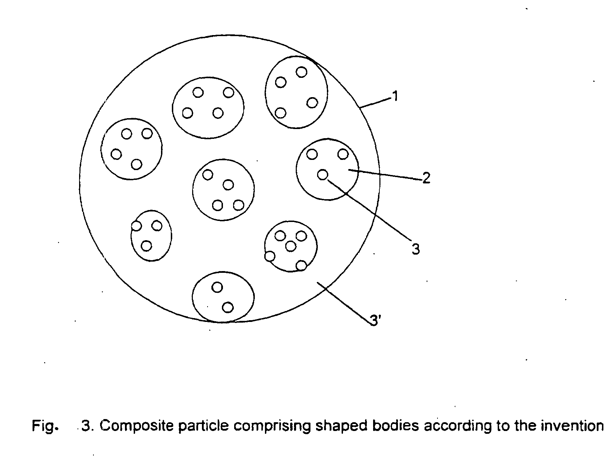

The present invention is further directed to crystalline Mg-Al-Si-containing clay-containing shaped bodies obtainable by the process according to the invention. As mentioned above, the shaped bodies appear to have high mechanical strength and attrition resistance, comparable with that of Mg-Al-Si-containing clay-containing bodies prepared by dispersing clay into a matrix or binder material and then shaping the clay- containing composition, yet without matrix or binder material having to be added to the crystalline clay. This means that with the process according to the invention, crystalline Mg-Al-Si-containing clay-containing shaped bodies can be prepared containing more than 50 wt%, preferably more than 70 wt %, or even more preferably more than 90 wt% crystalline clay. Although binder material may be present in the shaped crystalline clay containing bodies according to the invention, for instance as a result of an excess aluminium source present in the precursor mixture, any binder that is present in the shaped bodies according to the invention will be present as a discontinuous phase, as is depicted schematically in Figure 1. This is in contrast to Mg-Al-Si-containing clay-containing bodies prepared in the conventional way, i.e. by embedding clay into a matrix or binder material, where the binder material in the bodies is present in a continuous phase, as is schematically depicted in Figure 2. It is of course also possible to incorporate the crystalline Mg-Al-Si-containing clay-containing shaped bodies into a matrix. In that case, composite particles are obtained which comprise crystalline Mg-Al-Si-containing clay-containing shaped bodies with, optionally, binder material in a discontinuous phase, embedded in a binder material, as is schematically depicted in figure 3.
Figure 1: Schematic view of a shaped body according to the invention
Figure 2: Schematic view of a shaped body according to the prior art
Figure 3: Schematic view of a composite particle comprising shaped bodies according to the invention

In Figure 1 a schematic view is given of a shaped crystalline Mg-Al-Si-containing clay-containing body (1) according to the present invention which comprises crystalline clay (2) and binder material (3) in a discontinuous phase. In Figure 2 a schematic view is given of a shaped crystalline Mg-Al-Si-containing clay-containing body (1) according to the prior art which comprises crystalline clay (2) and binder material (3) in a continuous phase.
In Figure 3 a schematic view is given of a composite particle comprising crystalline Mg-Al-Si-containing clay-containing shaped bodies (1) which comprise crystalline clay (2) and binder material (3) in a discontinuous phase which are embedded in binder material (3') which is in a continuous phase.

## Claims

1. Process for the preparation of bodies containing crystalline Mg-Al-Si-containing clay from sources comprising an aluminium source, a magnesium source, and, a silicon source, comprising the steps of:
a) preparing a precursor mixture,
b) shaping the precursor mixture to obtain shaped bodies,
c) optionally thermally treating the shaped bodies, and
d) aging to obtain the crystalline Mg-Al-Si-containing clay-containing bodies.

2. Process according to claim 1 wherein in step a) an aluminium source, a magnesium source, and a silicon source are combined to obtain a precursor mixture.

3. Process according to claim 1 or 2 wherein an aluminium source is present in the precursor mixture and a magnesium source is added after the shaping step b).

4. Process according to claim 1 or 2 wherein a magnesium source is present in the precursor mixture and an aluminium source is added after the shaping step b).

5. Process according to any one of the preceding claims wherein an aluminium source is present in the precursor mixture and a silicon source is added after the shaping step b).

6. Process according to any one of the preceding claims 1-5 wherein the magnesium source and/or the alumina source is pretreated prior to being added to said precursor mixture or prior to being added to said shaped bodies, said pre-treatment comprising a thermal treatment, a hydrothermal treatment, an acid treatment, a base treatment or a combination of one or more of said treatments.

7. Process according to any one of preceding claims 1-6 wherein the aluminium source comprises aluminium trihydrate or its thermally treated form.

8. Process according to any one of preceding claims 1-7 wherein the aluminium source comprises (pseudo)boehmite.

9. Process according to any one of claims 1-7 wherein the aluminium source comprises an aluminium salt

10. Process according to any one of claims 1-7 wherein the aluminium source comprises an amorphous alumina gel.

11. Process according to any one of claims 1-7 wherein the aluminium source comprises kaolin.

12. Process according to any one of the preceding claims wherein the magnesium source comprises magnesium oxide.

13. Process according to any one of the preceding claims wherein additives are added in step a).

14. Process according to any one of the preceding claims wherein additives are added after the shaping step b).

15. Process according to any one of claims 1-14 wherein the precursor mixture is pre-aged prior to the shaping step at a temperature from 25°C to 500°C for a time from 1 minute to several days and under a pressure from atmospheric to an autogeneous pressure at temperatures above 100°C.

16. Process according to any one of claims 1-15 wherein step c) is conducted in several aging steps with drying and calcining following each aging.

17. Process according to any one of claims 1-15 wherein the shaped bodies may be provided with desired functionalities by addition of appropriate additives.

18. The process of claim 1 conducted batch-wise, continuous or partly continuous and partly batch-wise.

19. The process of claim 1 conducted in a continuous multi-step operation.

20. The process of claim 1 wherein additional components such as matrix or filler material are added prior to shaping step b).

## Patentansprüche

1. Verfahren zur Herstellung von Körpern, die kristallinen, Mg-Al-Si-enthaltenden Ton enthalten, aus Quellen, die eine Aluminiumquelle, eine Magnesiumquelle und eine Siliciumquelle umfassen, das die folgenden Schritte umfasst:
a) das Herstellen einer Vorstufen-Mischung,
b) das Formen der Vorstufen-Mischung, um geformte Körper zu erhalten,
c) gegebenenfalls das thermische Behandeln der geformten Körper und
d) das Altern, um die kristallinen, Mg-Al-Si-enthaltenden Ton enthaltenden Körper zu erhalten.

2. Verfahren gemäß Anspruch 1, wobei im Schritt a) eine Aluminiumquelle, eine Magnesiumquelle und eine Siliciumquelle kombiniert werden, um eine Vorstufen-Mischung zu erhalten.

3. Verfahren gemäß den Ansprüchen 1 oder 2, wobei eine Magnesiumquelle in der Vorstufen-Mischung vorliegt und eine Magnesiumquelle nach dem Formungsschritt b) zugegeben wird.

4. Verfahren gemäß den Ansprüchen 1 oder 2, wobei eine Magnesiumquelle in der Vorstufen-Mischung vorliegt und eine Aluminiumquelle nach dem Formungsschritt b) zugegeben wird.

5. Verfahren gemäß irgendeinem der vorhergehenden Ansprüche, wobei eine Aluminiumquelle in der Vorstufen-Mischung vorliegt und eine Siliciumquelle nach dem Formungsschritt b) zugegeben wird.

6. Verfahren gemäß irgendeinem der vorhergehenden Ansprüche 1 bis 5, wobei die Magnesiumquelle und/oder die Aluminiumquelle vorbehandelt wird, bevor sie zur Vorstufen-Mischung gegeben wird oder bevor sie zu den geformten Körpern gegeben wird, wobei die Vorbehandlung eine thermische Behandlung, eine hydrothermale Behandlung, eine Säure-Behandlung, eine Basen-Behandlung oder eine Kombination einer oder mehrerer dieser Behandlungen umfasst.

7. Verfahren gemäß irgendeinem der vorhergehenden Ansprüche 1 bis 6, wobei die Aluminiumquelle Aluminiumtrihydrat oder dessen thermisch behandelte Form umfasst.

8. Verfahren gemäß irgendeinem der vorhergehenden Ansprüche 1 bis 7, wobei die Aluminiumquelle (Pseudo)böhmit umfasst.

9. Verfahren gemäß irgendeinem der Ansprüche 1 bis 7, wobei die Aluminiumquelle ein Aluminiumsalz umfasst.

10. Verfahren gemäß irgendeinem der Ansprüche 1 bis 7, wobei die Aluminiumquelle ein amorphes Aluminiumoxid-Gel umfasst.

11. Verfahren gemäß irgendeinem der Ansprüche 1 bis 7, wobei die Aluminiumquelle Kaolin umfasst.

12. Verfahren gemäß irgendeinem der vorhergehenden Ansprüche, wobei die Magnesiumquelle Magnesiumoxid umfasst.

13. Verfahren gemäß irgendeinem der vorhergehenden Ansprüche, wobei Additive im Schritt a) zugegeben werden.

14. Verfahren gemäß irgendeinem der vorhergehenden Ansprüche, wobei Additive nach dem Formungsschritt b) zugegeben werden.

15. Verfahren gemäß irgendeinem der Ansprüche 1 bis 14, wobei die Vorstufen-Mischung vor dem Formungsschritt bei einer Temperatur von 25 °C bis 500 °C während einer Zeitspanne von 1 Minute bis zu mehreren Tagen und unter einem Druck von atmosphärischem Druck bis zu einem autogenen Druck bei Temperaturen von über 100 °C vorher gealtert wird.

16. Verfahren gemäß irgendeinem der Ansprüche 1 bis 15, wobei der Schritt c) in mehreren Alterungsschritten durchgeführt wird, wobei ein Trocknen und Calcinieren auf jede Alterung folgt.

17. Verfahren gemäß irgendeinem der Ansprüche 1 bis 15, wobei die geformten Körper mit erwünschten Funktionalitäten versehen werden können, indem man zweckmäßige Additive zugibt.

18. Verfahren gemäß Anspruch 1, der diskontinuierlich, kontinuierlich oder teilweise kontinuierlich und teilweise diskontinuierlich durchgeführt wird.

19. Verfahren gemäß Anspruch 1, der in einem kontinuierlichen Mehrstufen-Betrieb durchgeführt wird.

20. Verfahren gemäß Anspruch 1, wobei zusätzliche Komponenten wie Matrix- oder Füllstoff-Material vor dem Formungsschritt b) zugegeben werden.

## Revendications

1. Procédé de préparation de corps contenant une argile cristalline contenant Mg-Al-Si à partir de sources comprenant une source d'aluminium, une source de magnésium, et une source de silicium, comprenant les étapes visant à :
a) préparer un mélange précurseur,
b) façonner le mélange précurseur pour obtenir des corps façonnés,
c) éventuellement traiter thermiquement les corps formés, et
d) vieillir pour obtenir les corps contenant une argile cristalline contenant Mg-Al-Si.

2. Procédé selon la revendication 1, dans lequel dans l'étape a), une source d'aluminium, une source de magnésium, et une source de silicium sont combinées pour obtenir un mélange précurseur.

3. Procédé selon la revendication 1 ou 2, dans lequel une source d'aluminium est présente dans le mélange précurseur et une source de magnésium est ajoutée après l'étape de façonnage b).

4. Procédé selon la revendication 1 ou 2, dans lequel une source de magnésium est présente dans le mélange précurseur et une source d'aluminium est ajoutée après l'étape de façonnage b).

5. Procédé selon l'une quelconque des revendications précédentes, dans lequel une source d'aluminium est présente dans le mélange précurseur et une source de silicium est ajoutée après l'étape de façonnage b).

6. Procédé selon l'une quelconque des revendications précédentes 1 à 5, dans lequel la source de magnésium et/ou la source d'alumine est prétraitée avant d'être ajoutée audit mélange précurseur ou avant d'être ajoutée auxdits corps façonnés, ledit prétraitement comprenant un traitement thermique, un traitement hydrothermique, un traitement acide, un traitement basique ou une combinaison de l'un ou de plusieurs desdits traitements.

7. Procédé selon l'une quelconque des revendications précédentes 1 à 6, dans lequel la source d'aluminium comprend du trihydrate d'aluminium ou sa forme traitée thermiquement.

8. Procédé selon l'une quelconque des revendications précédentes 1 à 7, dans lequel la source d'aluminium comprend de la (pseudo)boéhmite.

9. Procédé selon l'une quelconque des revendications 1 à 7, dans lequel la source d'aluminium comprend un sel d'aluminium.

10. Procédé selon l'une quelconque des revendications 1 à 7, dans lequel la source d'aluminium comprend un gel d'alumine amorphe.

11. Procédé selon l'une quelconque des revendications 1 à 7, dans lequel la source d'aluminium comprend du kaolin.

12. Procédé selon l'une quelconque des revendications précédentes, dans lequel la source de magnésium comprend de l'oxyde de magnésium.

13. Procédé selon l'une quelconque des revendications précédentes, dans lequel on ajoute des additifs à l'étape a).

14. Procédé selon l'une quelconque des revendications précédentes, dans lequel on ajoute des additifs après l'étape de façonnage b).

15. Procédé selon l'une quelconque des revendications 1 à 14, dans lequel le mélange précurseur est pré-vieilli avant l'étape de façonnage à une température de 25 °C à 500 °C pendant un temps de 1 minutes à plusieurs jours et sous une pression allant de la pression atmosphérique à une pression autogène à des températures supérieures à 100 °C.

16. Procédé selon l'une des revendications 1 à 15, dans lequel l'étape c) est conduite en plusieurs étapes de vieillissement avec un séchage et une calcination à la suite de chaque vieillissement.

17. Procédé selon l'une quelconque des revendications 1 à 15 dans lequel les corps façonnés peuvent être fournis avec des fonctionnalités souhaitées par ajout d'additifs appropriés.

18. Procédé de la revendication 1 conduit par lot, de manière continue ou partiellement continue et partiellement par lot.

19. Procédé de la revendication 1 conduit dans une opération continue multi étapes.

20. Procédé de la revendication 1, dans lequel les composants supplémentaires tels qu'une matrice ou un matériau de charge sont ajoutés avant l'étape de façonnage b).
